# EUROPEAN PATENT APPLICATION

(11) **EP 3 736 825 A1**
(43) Date of publication of application: **11.11.2020**
(21) Application number: 18898462.9
(22) Date of filing: 13.11.2018
(51) Int. Cl.: H01B 1/06, C01F 17/00, H01M 4/36, H01M 4/525, H01M 4/62, H01M 10/052, H01M 10/0562

(54) **SOLID ELECTROLYTE MATERIAL AND BATTERY**

(30) Priority: 05.01.2018 JP 2018000420
(71) Applicant: Panasonic Intellectual Property Management Co., Ltd., Osaka-shi, Osaka 540-6207 (JP)
(72) Inventor: SAKAI Akihiro, Osaka-shi, Osaka 540-6207 (JP); ASANO Tetsuya, Osaka-shi, Osaka 540-6207 (JP); SAKAIDA Masashi, Osaka-shi, Osaka 540-6207 (JP); NISHIO Yusuke, Osaka-shi, Osaka 540-6207 (JP); MIYAZAKI Akinobu, Osaka-shi, Osaka 540-6207 (JP); HASEGAWA Shinya, Osaka-shi, Osaka 540-6207 (JP)
(74) Representative: Grünecker Patent- und Rechtsanwälte PartG mbB
(86) International application number: PCT/JP2018/041893
(87) International publication number: WO 2019/135317

(57) **Abstract**

Provided is a solid electrolyte material comprising Li, Y, Br, and Cl. In an X-ray diffraction pattern in which Cu-Kα is used as a radiation source, peaks are present within all ranges of diffraction angles 2θ of 13.6° to 14.4°, 27.4° to 28. 5°, 31.8° to 32.9°, 45.4° to 47.5°, 54.0° to 56.1°, and 56.6° to 59.0°.

## Description

### BACKGROUND

### 1. Technical Field

The present disclosure relates to a solid electrolyte material and a battery.

### 2. Description of the Related Art

Patent Literature 1 discloses an all-solid battery using a sulfide solid electrolyte.

Patent Literature 2 discloses an all-solid battery using, as a solid electrolyte, a halide including indium.

Non-Patent Literature 1 discloses Li₃YBr₆.

### CITATION LIST

### Patent Literature

Patent Literature 1: Japanese Patent Application Publication No. 2011-129312
Patent Literature 2: Japanese Patent Application Publication No. 2006-244734

### Non-Patent Literature

Non-patent Literature 1: Z. anorg. allg. Chem.623 (1997), 1352.

### SUMMARY

In the prior art, realization of a solid electrolyte material having high lithium ion conductivity is desired.

The solid electrolyte material in one aspect of the present disclosure comprises:
Li, Y, Br, and Cl,
wherein
in an X-ray diffraction pattern in which Cu-Ka is used as a radiation source, peaks are present within all ranges of diffraction angles 2θ of 13.6° to 14.4°, 27.4° to 28. 5°, 31.8° to 32.9°, 45.4° to 47.5°, 54.0° to 56.1°, and 56.6° to 59.0°.

According to the present disclosure, a solid electrolyte material having high lithium ion conductivity can be realized.

### BRIEF DESCRIPTION OF THE DRAWINGS

FIG. 1 is a schematic diagram showing a crystal structure of LiBr.
FIG. 2 is a schematic diagram showing a crystal structure of Li₃ErBr₆.
FIG. 3 is a cross-sectional view showing a schematic configuration of a battery in a second embodiment.
FIG. 4 is a schematic view showing an evaluation method of ion conductivity.
FIG. 5 is a diagram showing a peak pattern in an XRD of Li₃YBr₃Cl₃.
FIG. 6 is a diagram showing a peak pattern in the XRD of Li₃YBr₃Cl₃ which has been subjected to annealing.
FIG. 7 is a graph showing temperature dependence of the ion conductivity of solid electrolytes.
FIG. 8 is a graph showing an initial discharge characteristic.

### DETAILED DESCRIPTION OF THE EMBODIMENTS

Hereinafter, embodiments of the present disclosure will be described with reference to the drawings.

### (First embodiment)

The solid electrolyte material in the first embodiment is a solid electrolyte material comprising:
Li, Y, Br, and Cl,
wherein
in an X-ray diffraction pattern in which Cu-Ka is used as a radiation source, peaks are present within all ranges of diffraction angles 2θ of 13.6° to 14.4°, 27.4° to 28. 5°, 31.8° to 32.9°, 45.4° to 47.5°, 54.0° to 56.1°, and 56.6° to 59.0°.

According to the above configuration, a halide solid electrolyte material having high lithium ion conductivity can be realized. In addition, a solid electrolyte material having a stable structure can be realized in the presumed operation temperature range of a battery (for example, within the range of -30 °C to 80 °C). In other words, the solid electrolyte material of the first embodiment does not have a configuration (for example, the configuration of Patent Literature 2) in which a phase transition temperature is present in the operation temperature range of the battery. Thereby, even in an environment where there is a temperature change, high ion conductivity can be stably maintained without causing the phase transition within the operation temperature range of the battery, and a more practical battery can be realized.

In addition, according to the above configuration, since a solid electrolyte material having a conductivity of not less than 1 × 10⁻⁴ S/cm can be realized, an all-solid secondary battery excellent in a charge / discharge characteristic can be realized.. More desirably, a solid electrolyte material having a higher conductivity can be realized, and an all-solid secondary battery capable of being charged or discharged more rapidly can be realized. A solid electrolyte material having an ion conductivity of not less than 7 × 10⁻⁴ S/cm can be realized, depending on diffraction angles of a peak pattern provided even in the solid electrolyte material having the above configuration.

In addition, according to the above configuration, an all-solid secondary battery excellent in the charging / discharging characteristic can be realized by using the solid electrolyte material of the first embodiment. In addition, by using the solid electrolyte material of the first embodiment, an all-solid secondary battery which does not include sulfur can be realized. In other words, the solid electrolyte material of the first embodiment does not have a configuration (for example, the configuration of Patent Literature 1) in which hydrogen sulfide is generated when exposed to the atmosphere. As a result, an all-solid secondary battery which does not generate hydrogen sulfide and is excellent in safety can be realized.

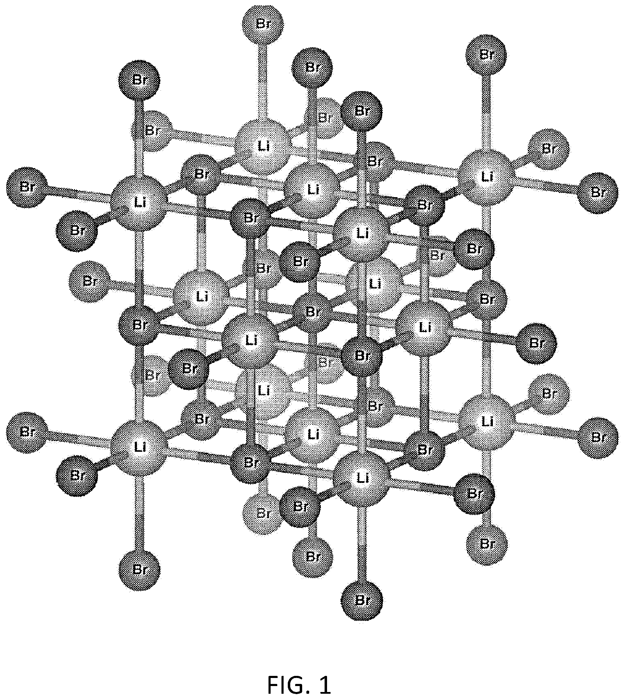

The solid electrolyte material in the first embodiment has, as a fundamental structure, LiBr, which has a rock salt structure. FIG. 1 shows a crystal structure of LiBr. Non-Patent Literature 1 reports that a crystal structure and a lattice constant of a material formed by doping LiBr with a rare earth element having a valence of +3. As the representative example thereof, Li₃ErBr₆ (hereinafter, may be referred to as LEB) has been reported, and its detailed atomic arrangement is published in the Inorganic Crystal Structure Database (ICSD).

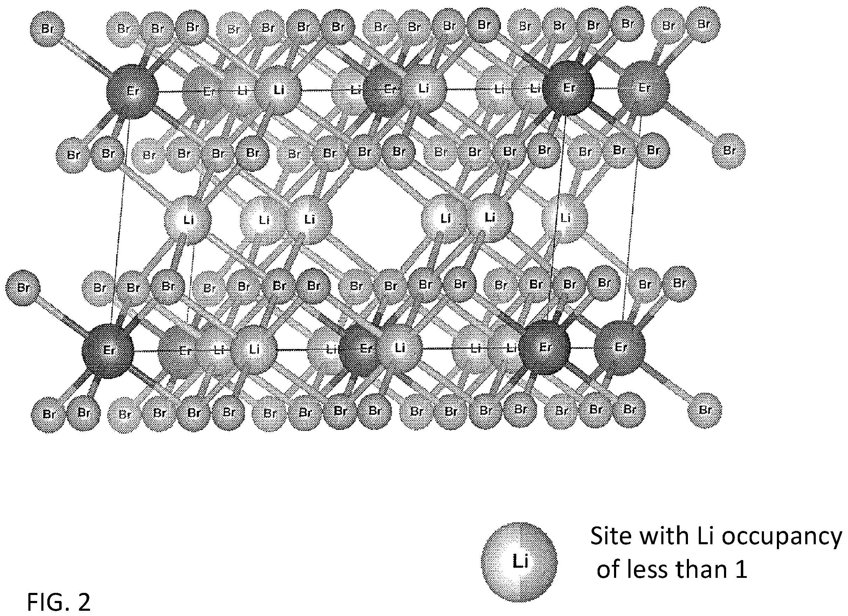

FIG. 2 is a schematic diagram showing the crystal structure of the LEB structure. It is presumed that anion arrangement in the crystal structure is the same as that of LiBr. Non-Patent Literature 1 discloses a crystal structure of Li₃YBr₆. The space group in Li₃YBr₆ is C2/m, and the details of the lattice constants thereof are a = 6.926 Å (namely, 0.6926 nm), b = 11.959 Å (namely, 1.1959 nm), and c = 6.843 Å (0.6843 nm), and β = 109.54°. The solid electrolyte material in the first embodiment is a material having a form in which a part of Br sites is further substituted with chlorine (Cl). A solid electrolyte that exhibits higher Li ion conduction by substituting the Br sites with Cl and the high-performance battery having the same can be realized.

In addition, cation arrangement of the solid electrolyte material in the first embodiment does not have to be the same as cation arrangement of the LEB structure. In other words, at least a part of Y and at least a part of Li may be irregularly arranged. In addition, if a vacancy of a cation site is present in the crystal, a part of at least one kind of cation selected from the group consisting of a Li cation and a Y cation and the vacancy may be exchanged with each other. According to this configuration, a solid electrolyte material having higher lithium ion conductivity can be realized. Specifically, since the arrangement of Y can be made irregular, it is presumed that conduction paths of the lithium ions are connected three-dimensionally with each other and that the lithium ion conductivity is further improved.

The solid electrolyte material in the first embodiment may include a first crystal phase and a different crystal phase having a crystal structure different from that of the first crystal phase. In this case, the different crystal phase may be interposed between portions of the first crystal phase, and the solid electrolyte material in the first embodiment may include an amorphous phase. In this case, the amorphous phase may be interposed between particles of the solid electrolyte described in the present embodiment. According to the above configuration, a solid electrolyte material having higher lithium ion conductivity can be realized. Specifically, the conduction of lithium ions is promoted by the amorphous phase. As a result, the lithium ion conductivity is further improved.

In the solid electrolyte material in the first embodiment, in the X-ray diffraction pattern using Cu-Ka as a radiation source, peaks may be present within all the ranges of the diffraction angles 2θ of13.8° to 14.2°, 27.8° to 28.4°, 32.3° to 32.8°, 46.2° to 47.2°, 54.8° to 56.0°, and 57.5° to 58.8°.

According to the above configuration, a solid electrolyte material having higher lithium ion conductivity can be realized.

The shape of the solid electrolyte material in the first embodiment is not particularly limited, and may be, for example, an acicular shape, a spherical shape, or an elliptical shape. For example, the solid electrolyte material in the first embodiment may be particles. In addition, the solid electrolyte material in the first embodiment may be formed into a pellet shape or a plate shape by pressurized particles. In addition, the solid electrolyte material in the first embodiment may include a crystal phase or may include an amorphous phase.

For example, if the shape of the solid electrolyte material in the first embodiment is particulate (for example, spherical), the median diameter thereof may be not less than 0.1 µm and not more than 100 µm. In addition, in the first embodiment, the median diameter may be not less than 0.5 µm and not more than 10 µm.

According to the above configuration, the ion conductivity can be further improved. In addition, a better dispersion state of the solid electrolyte material in the first embodiment and the active material can be formed. In addition, in the first embodiment, the solid electrolyte material may have a smaller median diameter than the active material.

According to the above configuration, a better dispersed state of the solid electrolyte material in the first embodiment and the active material can be formed.

In the present disclosure, the recitation "a range in which a predetermined value A is a value B to a value C" means "a range in which B ≤ A ≤ C".

### <Manufacturing method of Solid electrolyte material>

The solid electrolyte material in the first embodiment may be manufactured by the following method, for example.

Binary halide raw material powders are prepared so as to provide a blending ratio of a target composition. For example, if Li₃YBr₃Cl₃ is produced, LiBr and YCl₃ are prepared in a molar ratio of 3:1. The raw materials are not particularly limited. For example, LiCl or YBr₃ may be used in addition to the above-described raw materials. The composition of an anion can be determined by selecting the kinds of the raw material powders. After mixing the raw material powders well, the raw material powders are mixed and ground using a method such as mechanochemical milling to react. Alternatively, the raw material powders may be mixed well and then sintered in a vacuum or in an inert atmosphere such as an argon / nitrogen atmosphere.

Thereby, the solid electrolyte material including the crystal phase as described above is provided.

The configuration of the crystal phase in the solid material (namely, the crystal structure) and the position of each peak in the X-ray diffraction pattern using the Cu-Ka as a radiation source can be determined by adjusting a raw material ratio and by adjusting the reaction method and reaction conditions of the raw material powders.

### (Second embodiment)

Hereinafter, the second embodiment will be described. The description which has been set forth in the above-described first embodiment is omitted as appropriate.

The battery in the second embodiment is configured using the solid electrolyte material described in the first embodiment.

The battery in the second embodiment comprises a positive electrode, a negative electrode, and an electrolyte layer.

The electrolyte layer is a layer provided between the positive electrode and the negative electrode.

At least one of the positive electrode, the electrolyte layer, and the negative electrode includes the solid electrolyte material in the first embodiment.

According to the above configuration, the charge / discharge characteristic of the battery can be improved.

A specific example of the battery in the second embodiment will be described below.

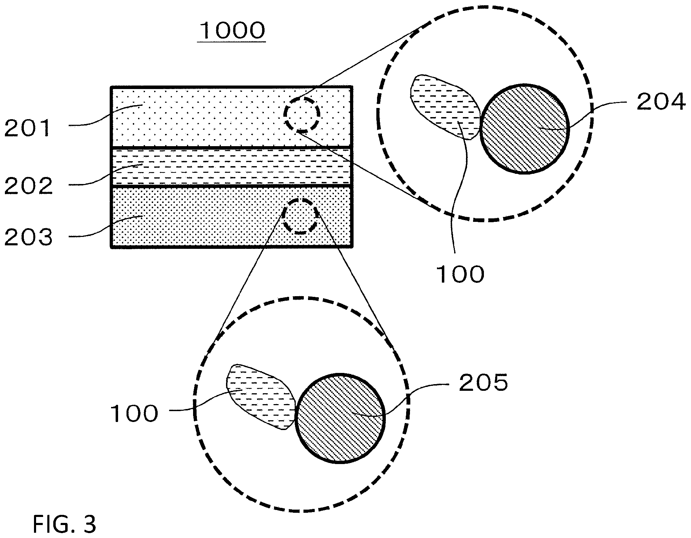

FIG. 3 is a cross-sectional view showing a schematic configuration of a battery 1000 in the second embodiment.

The battery 1000 in the second embodiment includes a positive electrode 201, a negative electrode 203, and an electrolyte layer 202.

The positive electrode 201 includes positive electrode active material particles 204 and solid electrolyte particles 100.

The electrolyte layer 202 is disposed between the positive electrode 201 and the negative electrode 203.

The electrolyte layer 202 includes an electrolyte material (for example, a solid electrolyte material).

The negative electrode 203 includes negative electrode active material particles 205 and the solid electrolyte particles 100.

The solid electrolyte particles 100 are particles each formed of the solid electrolyte material in the first embodiment or particles each including the solid electrolyte material in the first embodiment as a main component.

The positive electrode 201 includes a material having a characteristic of storing and releasing metal ions (for example, lithium ions). The positive electrode 201 includes, for example, a positive electrode active material (for example, the positive electrode active material particles 204).

Examples of the positive electrode active material include Li-containing transition metal oxides (e.g., Li(NiCoAl)O₂ or LiCoO₂), transition metal fluorides, polyanion materials, fluorinated polyanion materials, transition metal sulfides, transition metal oxyfluorides, transition metal oxysulfides, and transition metal oxynitrides.

The median diameter of the positive electrode active material particles 204 may be not less than 0.1 µm and not more than 100 µm. If the median diameter of the positive electrode active material particles 204 is not less than 0.1 µm, the positive electrode active material particles 204 and the halide solid electrolyte material can form a good dispersion state in the positive electrode. As a result, the charge / discharge characteristic of the battery is improved. In addition, if the median diameter of the positive electrode active material particles 204 is not more than 100 µm, Li diffusion in the positive electrode active material particles 204 is accelerated. As a result, the battery can operate at a high output.

The positive electrode active material may have a surface coated with an oxide different from the positive electrode active material in order to perform a battery operation. As a typical coating material, LiNbO₃ can be used. As long as the battery operation can be performed, the surface coating material is not limited to LiNbO₃, and the coating method is not limited, either. Typically, the thickness of the coating material is desirably approximately 1 to 50 nm to realize a high-performance battery.

The median diameter of the positive electrode active material particles 204 may be larger than the median diameter of the halide solid electrolyte material. Thereby, the good dispersion state of the positive electrode active material particles 204 and the halide solid electrolyte material can be formed.

With regard to a volume ratio "v: 100-v" between the positive electrode active material particles 204 and the halide solid electrolyte material included in the positive electrode 201, 30 ≤ v ≤ 95 may be satisfied. In the case of 30 ≤ v, a sufficient battery energy density can be secured. In addition, if v ≤ 95, an operation at a high output can be realized.

The thickness of the positive electrode 201 may be not less than 10 µm and not more than 500 µm. If the thickness of the positive electrode is not less than 10 µm, a sufficient battery energy density can be ensured. If the thickness of the positive electrode is not more than 500 µm, an operation at a high output can be realized.

The electrolyte layer 202 is a layer including an electrolyte material. The electrolyte material is, for example, a solid electrolyte material. In other words, the electrolyte layer 202 may be a solid electrolyte layer.

The solid electrolyte layer may include the solid electrolyte material in the first embodiment as a main component. In other words, the solid electrolyte layer may include the solid electrolyte material in the above-described first embodiment, for example, at a weight ratio of not less than 50% (namely, not less than 50% by weight) with respect to the entire solid electrolyte layer.

According to the above configuration, the charge / discharge characteristic of the battery can be further improved.

In addition, the solid electrolyte layer may include the solid electrolyte material in the first embodiment described above, for example, at a weight ratio of not less than 70% (namely, not less than 70% by weight) with respect to the entire solid electrolyte layer.

According to the above configuration, the charge / discharge characteristic of the battery can be further improved.

The solid electrolyte layer includes the solid electrolyte material in the above-described first embodiment as a main component, and may further include inevitable impurities, starting materials used when the solid electrolyte material is synthesized, byproducts, or decomposition products.

In addition, the solid electrolyte layer may include the solid electrolyte material in the first embodiment, for example, at a weight ratio of 100% (namely, 100% by weight) with respect to the entire solid electrolyte layer, excluding impurities mixed inevitably.

According to the above configuration, the charge / discharge characteristic of the battery can be further improved.

As described above, the solid electrolyte layer may be composed only of the solid electrolyte material in the first embodiment.

Alternatively, the solid electrolyte layer may be composed of only a solid electrolyte material different from the solid electrolyte material in the first embodiment. As the solid electrolyte material different from the solid electrolyte material in the first embodiment, for example, Li₂MgX₄, Li₂FeX₄, Li(Al, Ga, In)X₄, Li₃(Al, Ga, In)X₆, or LiI may be used. Here, X includes at least one selected from the group consisting of Cl, Br, and I.

The solid electrolyte layer may include simultaneously the solid electrolyte material in the first embodiment and the solid electrolyte material different from the solid electrolyte material in the first embodiment. At this time, both may be dispersed uniformly. Alternatively, a layer formed of the solid electrolyte material in the first embodiment and a layer formed of the solid electrolyte material different from the solid electrolyte material in the first embodiment may be sequentially arranged in the stacking direction of the battery.

The thickness of the solid electrolyte layer may be not less than 1 µm and not more than 100 µm. If the thickness of the solid electrolyte layer is not less than 1 µm, the positive electrode 201 and the negative electrode 203 are easily separated. In addition, if the thickness of the solid electrolyte layer is not more than 100 µm, an operation with high output can be realized.

The negative electrode 203 includes a material having a property of storing and releasing metal ions (for example, Li ions). The negative electrode 203 includes, for example, a negative electrode active material (for example, the negative electrode active material particles 205).

As the negative electrode active material, a metal material, a carbon material, an oxide, a nitride, a tin compound, or a silicon compound can be used. The metal material may be a single metal. Alternatively, the metal material may be an alloy. Examples of the metal material include lithium metal and a lithium alloy. Examples of the carbon material include natural graphite, coke, graphitized carbon, carbon fiber, spherical carbon, artificial graphite, and amorphous carbon. From the viewpoint of capacity density, silicon (Si), tin (Sn), a silicon compound, or a tin compound can be used. If a negative electrode active material having a low average reaction voltage is used, the effect of suppressing electrolysis by the solid electrolyte material in the first embodiment is better exhibited.

The median diameter of the negative electrode active material particles 205 may be not less than 0.1 µm and not more than 100 µm. If the median diameter of the negative electrode active material particles 205 is not less than 0.1 µm, the negative electrode active material particles 205 and the solid electrolyte particles 100 can form a good dispersion state in the negative electrode. As a result, the charge / discharge characteristic of the battery is improved. In addition, if the median diameter of the negative electrode active material particles 205 is not more than 100 µm, the lithium diffusion in the negative electrode active material particles 205 is accelerated. As a result, the battery can operate at a high output.

The median diameter of the negative electrode active material particles 205 may be larger than the median diameter of the solid electrolyte particles 100. As a result, the good dispersion state of the negative electrode active material particles 205 and the halide solid electrolyte material can be formed.

With regard to the volume ratio "v : 100-v" of the negative electrode active material particles 205 and the solid electrolyte particles 100 included in the negative electrode 203, 30 ≤ v ≤ 95 may be satisfied. In a case of 30 ≤ v, a sufficient battery energy density can be secured. In addition, if v ≤ 95, an operation at a high output can be realized.

The thickness of the negative electrode 203 may be not less than 10 µm and not more than 500 µm. If the thickness of the negative electrode is not less than 10 µm, the sufficient battery energy density can be secured. In addition, if the thickness of the negative electrode is not more than 500 µm, an operation at a high output can be realized.

At least one of the positive electrode 201, the electrolyte layer 202, and the negative electrode 203 may include a sulfide solid electrolyte or an oxide solid electrolyte for the purpose of improving ion conductivity. As the sulfide solid electrolyte, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂ can be used. As the oxide solid electrolyte, a NASICON solid electrolyte such as LiTi₂(PO₄)₃ and its element substitution products, a (LaLi)TiO₃ perovskite solid electrolyte, a LISICON solid electrolyte such as Li₁₄ZnGe₄O₁₆, Li₄SiO₄, or LiGeO₄ and its element substitution products, a garnet solid electrolyte such as Li₇La₃Zr₂O₁₂ and its element substitution products, Li₃N and its H substitution products, or Li₃PO₄ and its N substitution products can be used.

At least one of the positive electrode 201, the electrolyte layer 202, and the negative electrode 203 may include an organic polymer solid electrolyte for the purpose of improving ion conductivity. As the organic polymer solid electrolyte, for example, a compound of a polymer compound and a lithium salt can be used. The polymer compound may have an ethylene oxide structure. Since the polymer compound has the ethylene oxide structure, a large amount of lithium salt can be included, and the ion conductivity can be further improved. As the lithium salt, LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), or LiC(SO₂CF₃)₃ can be used. As the lithium salt, one lithium salt selected from these may be used alone. Alternatively, a mixture of two or more lithium salts selected from these may be used as the lithium salt.

At least one of the positive electrode 201, the electrolyte layer 202, and the negative electrode 203 may include a non-aqueous electrolyte solution, a gel electrolyte, and an ionic liquid for the purpose of facilitating exchange of lithium ions and improving the output characteristic of the battery.

The non-aqueous electrolyte solution includes a non-aqueous solvent and a lithium salt dissolved in the non-aqueous solvent. As the non-aqueous solvent, a cyclic carbonate solvent, a chain carbonate solvent, a cyclic ether solvent, a chain ether solvent, a cyclic ester solvent, a chain ester solvent, or a fluorine solvent can be used. Examples of the cyclic carbonate solvent include ethylene carbonate, propylene carbonate, and butylene carbonate. Examples of the chain carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Examples of the cyclic ester solvent include γ-butyrolactone. Examples of the chain ester solvent include methyl acetate. Examples of the fluorine solvent include fluoroethylene carbonate, methyl fluoropropionate, fluorobenzene, fluoroethyl methyl carbonate, or fluorodimethylene carbonate. As the non-aqueous solvent, one non-aqueous solvent selected from these can be used alone. Alternatively, a combination of two or more non-aqueous solvents selected from these can be used as the non-aqueous solvent. The non-aqueous electrolyte solution may include at least one fluorine solvent selected from the group consisting of fluoroethylene carbonate, methyl fluoropropionate, fluorobenzene, fluoroethyl methyl carbonate, and fluorodimethylene carbonate. As the lithium salt, LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), or LiC(SO₂CF₃)₃ can be used. As the lithium salt, one lithium salt selected from these may be used alone. Alternatively, a mixture of two or more lithium salts selected from these may be used as the lithium salt. The concentration of the lithium salt is, for example, in the range of 0.5 to 2 mol/liter.

As the gel electrolyte, a polymer material including a non-aqueous electrolyte solution can be used. As the polymer material, polyethylene oxide, polyacrylonitrile, polyvinylidene fluoride, polymethyl methacrylate, or a polymer having an ethylene oxide bond may be used.

The cation which forms the ionic liquid may be an aliphatic chain quaternary salt such as tetraalkylammonium or tetraalkylphosphonium, an aliphatic cyclic ammonium such as pyrrolidinium, morpholinium, imidazolinium, tetrahydropyrimidinium, piperazinium or piperidinium, or a nitrogen-including heterocyclic aromatic cation such as pyridinium or imidazolium. The anion which forms the ionic liquid may be PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, or C(SO₂CF₃)₃⁻. The ionic liquid may include a lithium salt.

At least one of the positive electrode 201, the electrolyte layer 202, and the negative electrode 203 may include a binder for the purpose of improving adhesion between the particles. The binder is used to improve the binding property of the material which forms the electrode. The binders include polyvinylidene fluoride, polytetrafluoroethylene, polyethylene, polypropylene, aramid resin, polyamide, polyimide, polyamideimide, polyacrylonitrile, polyacrylic acid, methyl polyacrylate ester, ethyl polyacrylate eter, hexyl polyacrylate ester, polymethacrylic acid, methyl polymethacrylate ester, ethyl polymethacrylate ester, hexyl polymethacrylate ester, polyvinylpressu acetate, polyvinylpyrrolidone, polyether, polyethersulfone, hexafluoropolypropylene, styrene butadiene rubber, or carboxymethylcellulose. The binder may be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. In addition, two or more kinds selected from these may be mixed and used as the binder.

In addition, at least one of the positive electrode 201 and the negative electrode 203 may include a conductive agent as necessary.

The conductive agent is used to lower electrode resistance. Examples of conductive agent include graphite such as natural graphite or artificial graphite, carbon black such as acetylene black or ketjen black, a conductive fiber such as a carbon fiber or a metal fiber, carbon fluoride, a metal powder such as aluminum, a conductive whisker such as zinc oxide or potassium titanate, a conductive metal oxide such as titanium oxide, or a conductive polymer compound such as polyaniline, polypyrrole, or polythiophene. In addition, cost reduction can be achieved by using a carbon conductive agent as the conductive agent.

Note that the battery in the second embodiment can be configured as a battery having various shapes such as a coin shape, a cylindrical shape, a prism shape, a sheet shape, a button shape, a flat shape, or a laminated shape.

### EXAMPLES

Hereinafter, details of the present disclosure will be described with reference to the inventive examples and comparative examples.

### << Inventive example 1 >>

Hereinafter, a method for synthesizing and evaluating the solid electrolyte in the present example will be described.

### [Production of Solid Electrolyte Material]

In a glove box maintained in a dry and low-oxygen atmosphere with a dew point of -90 °C or less and an oxygen value of 5 ppm or less, raw material powders LiBr, YBr₃, LiCl, and YCl₃ were prepared so as to have a molar ratio of Li : Y : Br : Cl = 3 : 1: 6-x : x. These were ground and mixed in a mortar. Subsequently, milling processing was performed at 600 rpm for 25 hours using a planetary ball mill.

In the inventive examples 1-1 to 1-5, the values of x were 0.5, 1, 2, 3, and 3.5, respectively.

As a result, Li₃YBr₆₋ₓClₓ powders, which were the solid electrolyte materials of the inventive example 1, were provided.

### [Structural Evaluation of Solid Electrolyte Material]

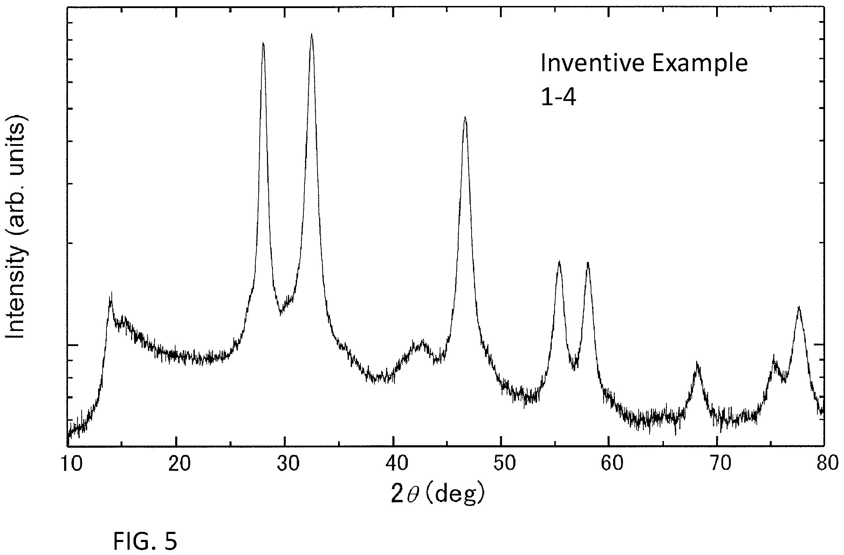

Evaluation was performed using an X-ray diffraction (XRD) method in an environment where the synthesized solid electrolyte material was maintained in a dry atmosphere with a dew point value of -40 °C or lower. For the X-ray source, Cu-Ka rays were used. In other words, the X-ray diffraction was measured by a θ-2θ method using Cu-Ka rays (wavelengths 1.5405 Å (i.e., 0.15405 nm) and 1.5444 Å (i.e., 0.15444 nm)) as X-rays. As a result, similar peak patterns were provided for all of the materials synthesized as the inventive examples 1-1 to 1-5. FIG. 5 shows the XRD peak pattern of the inventive example 1-4, namely, Li₃YBr₃Cl₃, as a typical XRD peak pattern of the inventive example 1.

### [Evaluation of Lithium Ion conductivity]

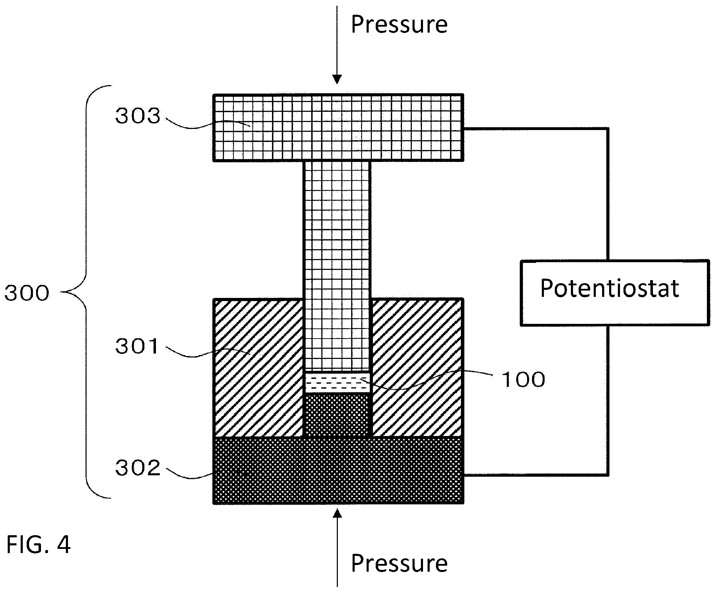

FIG. 4 is a schematic view showing an evaluation method of ion conductivity. The pressure-molding die 300 includes a frame 301 formed of an electronically insulating polycarbonate, an upper punch part 303 and a lower punch part 302, both of which were formed of electron conductive stainless steel.

Using the configuration shown in FIG. 4, the ion conductivity was evaluated by the following method. In a glove box maintained in a dry and low-oxygen atmosphere with a dew point of -90 °C or less and an oxygen value of 5 ppm or less, the inside of the pressure-molding die 300 was filled with the powder of the solid electrolyte material of the inventive example 1 (example of the solid electrolyte particles 100). The powder was pressurized uniaxially at 400 MPa to produce a conductivity measurement cell of the inventive example 1. In a pressurized state, lead wires were routed from the upper punch part 303 and the lower punch part 302, connected to a potentiostat (Princeton Applied Research, VersaSTAT4) equipped with a frequency response analyzer. The ion conductivity at room temperature was measured by an electrochemical impedance measurement method.

The ion conductivity of the solid electrolyte material of the inventive example 1 measured at 22 °C is shown in Table 1, which is shown below.

**[Table 1]**

| | Constituent elements | XRD peak angles | Conductivity (10⁻⁴ S/cm) | Presence or Absence of Phase Transition | Initial Discharge Capacity (µAh) |
|---|---|---|---|---|---|
| Inventive Example 1-1 | Li, Y, Br, Cl | 13.66°, 27.43°, 31.84°, 45.59°, 54.03°, 56.69° | 4.5 | None | 700 |
| Inventive Example 1-2 | Li, Y, Br, Cl | 13.74°, 27.64°, 31.97°, 45.88°, 54.42°, 57.11° | 5.9 | None | 750 |
| Inventive Example 1-3 | Li, Y, Br, Cl | 13.88°, 27.82°, 32.3°, 46.25°, 54.82°, 57.55° | 7.5 | None | 720 |
| Inventive Example 1-4 | Li, Y, Br, Cl | 13.94°, 28.04°, 32.49°, 46.63°, 55.45°, 58.10° | 8.0 | None | 730 |
| Inventive Example 1-5 | Li, Y, Br, Cl | 14.20°, 28.33°, 32.77°, 47.20°, 55.98°, 58.71° | 9.7 | None | 710 |
| Comparative Example 1-1 | Li, In, Br | - | <1E-3 | 55 °C | - |
| Comparative Example 1-2 | Li, Fe, Cl | - | 8.7E-2 | - | 1 |

### [Evaluation of Phase Transition]

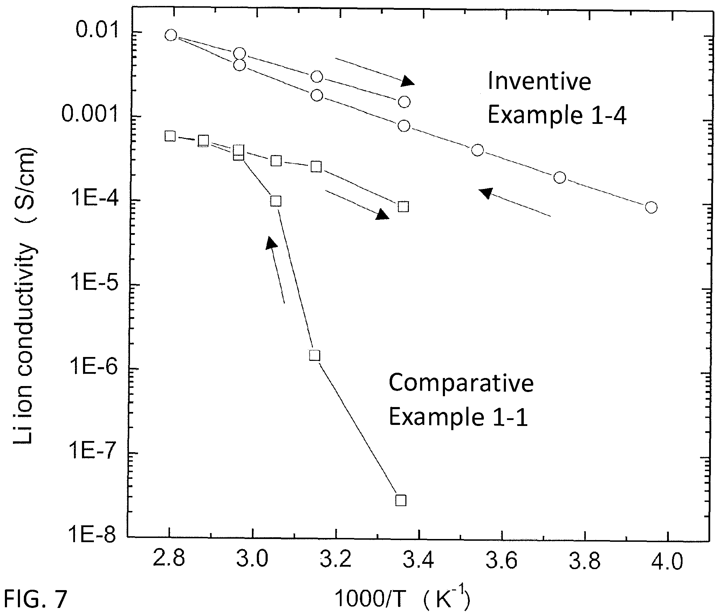

FIG. 7 is a graph showing temperature dependence of the ion conductivity of solid electrolytes. FIG. 7 shows the measurement result of the inventive example 1-4 (x=3, Li₃YBr₃Cl₃) as a typical behavior of the inventive example 1. Similar measurements were conducted in all the inventive examples 1-1 to 1-5, which are shown in Table 1. In all the inventive examples, no sudden change in conductivity indicating a phase change (i.e., a phase transition) was observed.

A method for measuring the temperature dependence of ion conductivity will be described below. The solid electrolyte materials of the inventive examples 1-1 to 1-5 which corresponded to a thickness of 700 µm were inserted into respective insulating outer cylinders. Each of the solid electrolyte materials was pressure-molded at a pressure of 40 MPa to provide solid electrolyte layers. Next, aluminum electrodes which corresponded to a thickness of 50 µm were stacked on the upper and lower surfaces of each of the solid electrolyte layers. Each of the solid electrolyte layers having the aluminum electrodes was press-molded at a pressure of 360 MPa to produce stacking structures. Next, stainless-steel current collectors were disposed on the upper and lower parts of each of the stacking structures, and current collector leads were attached to the current collectors. Finally, an insulating ferrule was used to block and seal the insides of the insulating outer cylinders from the outside atmosphere. The test bodies each including the stacking structure provided by the above method were put in a thermostatic chamber, and the temperature dependence of the ion conductivity was measured in a temperature rising process and a temperature falling process.

### [Evaluation of Composition]

The solid electrolyte materials of the inventive example 1 were evaluated for the compositions thereof using ICP (Inductively Coupled Plasma) emission spectroscopy. As a result, in each of the inventive examples 1-1 to 1-5, deviation of Li / Y from its charged composition was within 3%. In other words, it can be said that the charged composition with the planetary ball mill was almost the same as the composition of the solid electrolyte material described in each of the inventive examples.

Hereinafter, a method for synthesizing and evaluating solid electrolytes used as a referential example and comparative examples will be described.

### << Comparative example 1-1 >>

In a glove box maintained in a dry and low-oxygen atmosphere with a dew point of -90 °C or less and an oxygen value of 5 ppm or less, raw material powders LiBr and InBr₃ were prepared in a molar ratio of LiBr: InBr₃ = 3:1. These were ground and mixed in a mortar. Then, the sample pressure-molded into a shape of a pellet was vacuum-sealed in a glass tube and sintered at 200 °C for 1 week.

As a result, Li₃InBr₆, which was the solid electrolyte material of the comparative example 1-1, was provided.

The ion conductivity and the phase transition of the solid electrolyte material of the comparative example 1-1 were evaluated. The ion conductivity measured at 22 °C was less than 1 × 10⁻⁷ S/cm. FIG. 7 shows the temperature dependence of the ion conductivity of the solid electrolyte material of the comparative Example 1-1. As shown in FIG. 7, due to the temperature dependence of the conductivity, the conductivity changed suddenly at around 55 °C during the temperature rising process. In other words, a phase change was observed in the solid electrolyte material of the comparative example 1-1.

### « Comparative example 1-2 »

LiCl and FeCl₂ were used as the raw material powders for a solid electrolyte, and mixed at a molar ratio of LiCl: FeCl₂ = 2:1.

As a result, Li₂FeCl₄, which was the solid electrolyte material of the comparative example 1-2, was provided.

Except for this, the ion conductivity of the solid electrolyte material of the comparative example 1-2 was evaluated in the same manner as in the inventive example 1. The measured ion conductivity was 8.7 × 10⁻⁶ S/cm.

Hereinafter, a method for producing and evaluating secondary batteries using Li₃YBr₆₋ₓClₓ in the present example will be described.

### [Production of Secondary Battery]

In a glove box maintained in a dry and low-oxygen atmosphere with a dew point of -90 °C or less and an oxygen value of 5 ppm or less, the solid electrode material of each of the inventive examples 1-1 to 1-5 and LiCoO₂, which was the positive electrode active material, were prepared at a volume ratio of 30:70. These were mixed in an agate mortar to prepare a positive electrode mixture.

The solid electrolyte materials of the inventive example 1, each of which corresponded to a thickness of 700 µm, and 12.3 mg of the positive electrode mixture were stacked in this order in respective insulating outer cylinders. Each of the solid electrolyte materials having the positive electrode mixture was pressure-molded at a pressure of 360 MPa to provide a positive electrode and a solid electrolyte layer.

Next, a metal In (thickness: 200 µm) was stacked on the opposite side to the side which was in contact with the positive electrode of the solid electrolyte layer. Each of the solid electrolyte materials having the positive electrode mixture and the metal In was pressure-molded at a pressure of 80 MPa to produce a stacking structure of the positive electrode, the solid electrolyte layer, and the negative electrode. Next, stainless-steel current collectors were disposed on the upper and lower parts of each of the stacking structures, and current collector leads were attached to the current collectors. Finally, an insulating ferrule was used to block and seal the insides of the insulating outer cylinders from the outside atmosphere.

Thus, the secondary batteries using the solid electrolytes of the inventive examples 1-1 to 1-5 were produced.

### [Charge / Discharge Test]

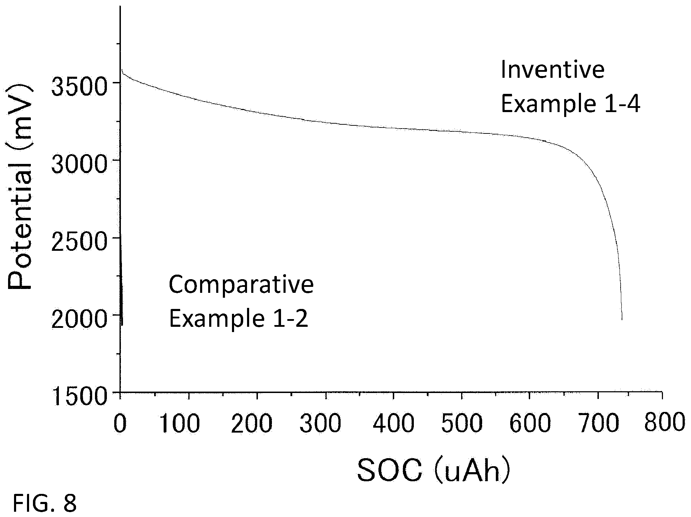

FIG. 8 shows a graph of the inventive example 1-4 as a typical initial discharge characteristic.

The results shown in FIG. 8 were provided by the following method. In other words, the secondary batteries of the inventive example 1 were disposed in a thermostatic chamber at 25 °C. Constant-current charge was performed at a current value of 0.05 C rate (20 hour rate) with respect to theoretical capacity of each of the batteries, and the charge was terminated at a voltage of 3.6 V. Next, each of the batteries was discharged at a current value of the same 0.05 C rate, and the discharge was terminated at a voltage of 1.9 V. From the results of the measurements, the initial discharge capacities are provided in Table 1.

### « Discussion »

As understood from the comparison of the inventive examples 1-1 to 1-5 to the comparative example 1-1, it can be seen that the phase transition does not occur in the solid electrolyte materials of the present examples within the range of -30 °C to 80 °C, whereas the phase transition occurs in the comparative example 1-1. In other words, it can be seen that each of the solid electrolytes of the inventive examples 1-1 to 1-5 has a stable structure in the assumed operation temperature range of the battery.

In addition, as understood from the comparison of the inventive examples 1-1 to 1-5 to the comparative examples 1-1 and 1-2, it can be seen that a high ion conductivity of not less than 1 × 10⁻⁴ S/cm is exhibited in the inventive examples 1-1 to 1-5, whereas an ion conductivity of less than 1 × 10⁻⁴ S/cm is exhibited in the comparative examples 1-1 and 1-2. This reveals that a material having peaks in the X-ray diffraction pattern using the Cu-Ka as a radiation source are present within the ranges of 13.6° to 14.4°, 27.4° to 28.5°, 31.8° to 32.9°, 45.4° to 47.5°, 54.0° to 56.1°, and 56.6° to 59.0° exhibits high conductivity.

In particular, since a higher ion conductivity of not less than 7 × 10⁻⁴ S/cm was observed in the inventive examples 1-3 to 1-5, it can be said that the solid electrolyte materials of the inventive examples 1-3 to 1-5 are more desirable solid electrolyte materials. Accordingly, the material having the peaks in the X-ray diffraction pattern using the Cu-Ka as a radiation source are present within the ranges of 13.8° to 14.2°, 27.8° to 28.4°, 32.3° to 32.8°, 46.2° to 47.2°, 54.8° to 56.0°, and 57.5° to 58.8° exhibits higher conductivity, which is desirable.

In addition, each of the batteries of the inventive examples 1-1 to 1-5 exhibited a charge / discharge operation at room temperature. On the other hand, in the comparative example 1-2, the discharge capacity was hardly provided, and the battery operation failed to be observed.

From the above, it is shown that the solid electrolyte material according to the present disclosure is an electrolyte material that does not generate hydrogen sulfide and can stably maintain high lithium ion conductivity. Further, it is shown that an all-solid battery which does not generate hydrogen sulfide and is excellent in the charge / discharge characteristic can be realized.

### <<Inventive example 2>>

Hereinafter, a method for synthesizing and evaluating a solid electrolyte in this example will be described.

### [Production of Solid Electrolyte Material]

In the inventive examples 2-1 to 2-5, the solid electrolyte materials synthesized in the inventive examples 1-1 to 1-5 were annealed, respectively, at 300 °C for 48 hours in an electric furnace put in a glove box maintained in a dry and low-oxygen atmosphere with a dew point of -90 °C or less and an oxygen value of 5 ppm or less.

### [Structural Evaluation of Solid Electrolyte Material]

The solid electrolyte materials synthesized in the inventive examples 2-1 to 2-5 were evaluated by an X-ray diffraction (XRD) method in an environment where a dry atmosphere with a dew point value of -40 °C or lower was maintained. As the X-ray source, Cu-Ka rays were used. In other words, the X-ray diffraction was measured by the θ-2θ method using the Cu-Ka rays (wavelengths of 1.5405 Å (i.e., 0.15405 nm) and 1.5444 Å (i.e., 0.15444 nm)) as the X-rays. As a result, similar peak patterns were provided in all the materials synthesized in the inventive examples 2-1 to 2-5.

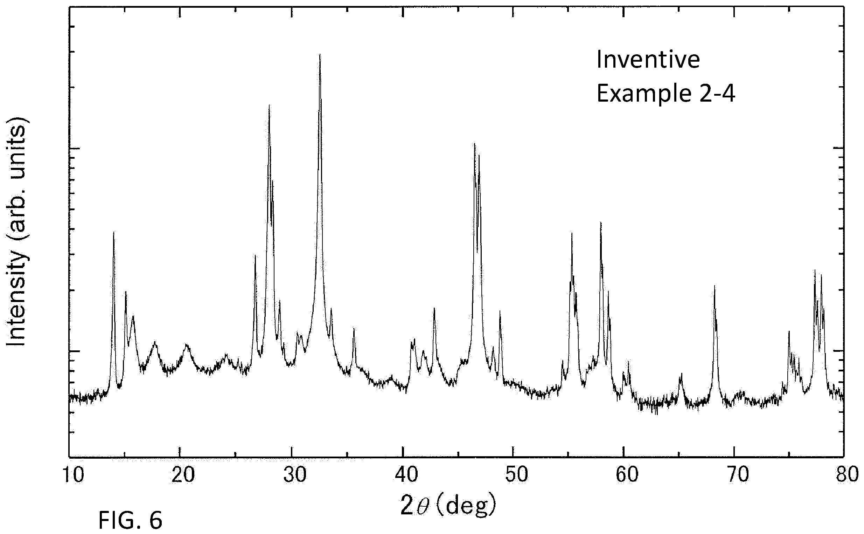

As a typical XRD peak pattern of the inventive example 2, FIG. 6 shows the peak pattern of the inventive example 2-4, namely, the peak pattern of Li₃YBr₃Cl₃ (x = 3).

The peaks observed in the inventive example 2-4 were sharper, and peaks that were not observed in the inventive example 1-4 were observed. This would be an effect of homogenization of the crystal structure due to the progress of crystallization by the annealing. In addition, little change in the positions of the peaks due to the annealing was observed.

### [Evaluation of Ion Conductivity]

The ion conductivity of the solid electrolyte materials in the present example was measured by the same method as in the inventive example 1. The results are shown in Table 2 below.

**[Table 2]**

| | Constituent elements | Conductivity (10⁻⁴ S/cm) | Initial Discharge Capacity (µAh) |
|---|---|---|---|
| Inventive Example 2-1 | Li, Y, Br, Cl | 12.5 | 700 |
| Inventive Example 2-2 | Li, Y, Br, Cl | 17.0 | 740 |
| Inventive Example 2-3 | Li, Y, Br, Cl | 17.8 | 750 |
| Inventive Example 2-4 | Li, Y, Br, Cl | 15.5 | 740 |
| Inventive Example 2-5 | Li, Y, Br, Cl | 4.6 | 700 |

### [Evaluation of Phase Transition]

The same method as in the inventive example 1 was used. Within the temperature range from -30 °C to 80 °C, in all the inventive examples 2-1 to 2-5, no sudden change in the conductivity indicating a phase change (i.e., phase transition) was observed.

### [Evaluation of Secondary Battery]

The secondary batteries were manufactured using the solid electrolyte materials of the inventive examples 2-1 to 2-5 in the same manner as in the inventive example 1. The results of the initial discharge capacities are shown in Table 2. In each of the batteries using the solid electrolyte materials described in the present example, the battery charge / discharge operation was exhibited at room temperature, similarly to the batteries of the inventive example 1.

### << Discussion >>

It can be seen that no phase transition occurs in the solid electrolyte materials of the inventive examples 2-1 to 2-5 within the range of -30 °C to 80 °C, similarly to those in the inventive example 1. In addition, as understood from the comparison of the inventive examples 2-1 to 2-5 to the comparative examples 1-1 and 1-2, a high ion conductivity of not less than 1 × 10⁻⁴ S/cm is exhibited in the inventive examples 2-1 to 2-5 at near room temperature, whereas an ion conductivity of less than 1 × 10⁻⁴ S/cm is exhibited in the comparative example 1-1.

In addition, in the inventive examples 2-1 to 2-5, the battery charge / discharge operation was performed at room temperature. On the other hand, in the comparative example 1-2, the discharge capacity was hardly provided, and the battery operation failed to be observed.

From the above, it is shown that the solid electrolyte material according to the present disclosure is an electrolyte material that does not generate hydrogen sulfide and can stably maintain high lithium ion conductivity. Further, it is shown that an all-solid battery which does not generate hydrogen sulfide and is excellent in the charge / discharge characteristic can be realized.

### INDUSTRIAL APPLICABILITY

The battery of the present disclosure can be used as, for example, an all-solid lithium secondary battery.

### REFERENCE SIGNS LIST

- 100: Solid electrolyte particles
- 201: Positive electrode
- 202: Electrolyte layer
- 203: Negative electrode
- 204: Positive electrode active material particles
- 205: Negative electrode active material particles
- 300: Pressure-molding die
- 301: Frame
- 302: Lower punch part
- 303: Upper punch part
- 1000: Battery

## Claims

1. A solid electrolyte material comprising:
Li, Y, Br, and Cl,
wherein
in an X-ray diffraction pattern in which Cu-Ka is used as a radiation source, peaks are present within all ranges of diffraction angles 2θ of 13.6° to 14.4°, 27.4° to 28. 5°, 31.8° to 32.9°, 45.4° to 47.5°, 54.0° to 56.1°, and 56.6° to 59.0°.

2. The solid electrolyte material according to claim 1, wherein
the peaks are present within all ranges of diffraction angles 2θ of 13.8° to 14.2°, 27.8° to 28.4°, 32.3° to 32.8, 46.2° to 47.2°, 54.8° to 56.0°, and 57.5° to 58.8°.

3. A battery, comprising:
a positive electrode;
a negative electrode; and
an electrolyte layer provided between the positive electrode and the negative electrode,
wherein
at least one selected from the group consisting of the positive electrode, the negative electrode, and the electrolyte layer includes the solid electrolyte material according to claim 1 or 2.
